# EUROPEAN PATENT APPLICATION

(11) **EP 2 600 496 A1**
(43) Date of publication of application: **05.06.2013**
(21) Application number: 11812426.2
(22) Date of filing: 25.07.2011
(51) Int. Cl.: H02K 1/22, H02K 1/27

(54) **ROTOR AND MOTOR**

(30) Priority: 30.07.2010 JP 2010172260
(71) Applicant: Honda Motor Co., Ltd., Minato-ku Tokyo 107-8556 (JP)
(72) Inventor: TAKIZAWA Daijiro, Wako-shi Saitama 351-0193 (JP); IWAI Akinobu, Wako-shi Saitama 351-0193 (JP)
(74) Representative: Prechtel, Jörg
(86) International application number: PCT/JP2011/066832
(87) International publication number: WO 2012/014836

(57) **Abstract**

Disclosed is a rotor comprising a cylindrical rotor core and a perpetual magnet arranged along predetermined polar pitch angles in the peripheral direction of the rotor core when viewed from a sight line that includes the center axis of this rotor core. The rotor core has: an opening formed in the outer circumferential surface of the rotor core and into which the perpetual magnet is inserted; auxiliary-pole-forming grooves formed by a pair of first and second grooves that each extend in the axial center direction on both sides in the peripheral direction of the opening, with the number of grooves matching the number of magnetic poles; an auxiliary pole formed between the first groove and the second groove adjacent to the first groove; and a rib formed between the opening and the auxiliary-pole-forming grooves, in a yoke section of the rotor core. A stress absorbing section is formed in the rib and is made from a thin-walled section thinner than the thinnest part of the yoke section in a cross-section view of a cross-section including the rotor axis center.

## Description

### Technical Field

The present invention relates to a rotor and a motor.
Priority is claimed on Japanese Patent Application No. 2010-172260, filed July 30,2010, the content of which is incorporated herein by reference.

### Background Art

In the related art, motors are known including a rotor that is rotatably supported around an axial center and has permanent magnets disposed therearound, and a stator that is arranged around the rotor to face the rotor and has coils wound therearound. In such motors, a motor that achieves high torque and high efficiency is proposed (for example, refer to Patent Document 1).

For example, in the permanent magnet motor (motor) of Patent Document 1, the rotor (rotor) is arranged inside the stator that generates a rotating magnetic field. In the vicinity of a d-axis of this rotor, a plurality of first permanent magnets with a rectangular cross-section is buried at equal intervals in the circumferential direction. Moreover, in the vicinity of a q-axis, a plurality of second prismatic permanent magnets is arranged at equal intervals in the circumferential direction. The main poles are formed by these first and second permanent magnets, and the paths (magnetic paths) of magnetic flux from one q-axis to another q-axis are secured between the first permanent magnets and the second permanent magnets. Additionally, interpoles are formed at the rotor and flux barriers are formed on both end sides of the first permanent magnets.

### Prior Art Documents

### Patent Documents

[Patent Document 1] Japanese Unexamined Patent Application, First Publication No. 2000-333390

### Disclosure of Invention

### Problems to be Solved by the Invention

Incidentally, in the rotor of Patent Document 1 described above, the flux barriers in which cutout portions (interpole-forming grooves) are formed in the peripheral edge portion of the rotor core are proposed. When such a rotor rotates about the axial center, a centrifugal force is generated in the permanent magnets. As a result, stress concentrates on the root (radial outside end portion of a rib) of a rib formed between the permanent magnets and the interpole-forming grooves. Accordingly, such a rotor strengthens the root portion of the rib, and it is necessary to prevent the rotor core from being bent. For this reason, the rotor of the related art has a problem in that design should be made so that the thickness of the root portion of the rib can be secured.

Thus, an object of the invention is to provide a rotor and a motor capable of suppressing stress concentration on the root of a rib.

### Means for Solving the Problems

In order to solve the above problem, respective aspects of the invention adopt the following means.
[1] A rotor related to one aspect of the invention is a rotor including a columnar rotor core; and permanent magnets arranged side by side along a predetermined polar pitch angle in the circumferential direction of the rotor core when viewed from a sight line including an axial center of the rotor core. The rotor core is formed with openings formed in the outer peripheral surface of the rotor core and having the permanent magnets inserted thereinto; interpole-forming grooves formed by a pair of first and second grooves that each extend in the direction of the axial center on both circumferential sides of the openings, and formed in the same number as the number of magnetic poles; an interpole formed between the first groove and the second groove adjacent to the first groove; and a rib formed between the opening and the interpole-forming groove, in a yoke portion of the rotor core. The rib is formed with a stress-absorbing portion made from a thin-walled portion with a smallest thickness in the yoke portion in a cross-sectional view of a cross-section including the axial center of the rotor.

[2] In the rotor described in the above [1], a longitudinal axis of the opening may be formed so as to be orthogonal to a centerline passing through the central angle of the polar pitch angle when viewed from the sight line including the axial center of the rotor core; the side surfaces of the rib may have a first rib side surface on the side of the permanent magnet, a first circular arc connected to the opening from the first rib side surface, a second rib side surface on the interpole side, and a second circular arc connected to the interpole from the second rib side surface; and the stress-absorbing portion may be provided between the first rib side surface and the second rib side surface.

[3] In the rotor described in the above [1], when viewed from the sight line including the axial center of the rotor core, the distance of the yoke portion from the axial center may become shorter when approaching both circumferential ends of the polar pitch angle from an intersection between the centerline passing through the central angle of the polar pitch angle and the outer peripheral surface of the rotor core.

[4] In the rotor described in the above [1], a circumferential center of an inner wall side surface of the opening that faces a planar portion on the radial outside of the permanent magnet may be located on the radial outside of the rotor core with respect to both circumferential ends of the inner wall side surface.

[5] A motor related to one aspect of the invention is a motor including the rotor described in any one of the above [1] to [4]; a cylindrical stator disposed so as to surround the rotor; and a winding wire wound around a teeth portion of the stator.

### Effects of Invention

According to the rotor related to the aspect of the above [1], if the rotor core rotates around the axial center in a state where the permanent magnet is inserted into the opening, a centrifugal force is generated in the permanent magnet. In this case, the stress of the permanent magnet concentrates on the stress-absorbing portion of the rib. Since this stress-absorbing portion is made from the thin-walled portion with a smallest thickness in the yoke portion in a cross-sectional view of a cross-section including the axial center of the rotor, the stress-absorbing portion can efficiently absorb the stress generated in the rotor. For this reason, the stress concentration to the root of the rib can be suppressed. From the above, it is unnecessary to secure the thickness of the root portion of the rib, and reduction in the weight of the rotor can be realized.

According to the rotor related to the aspect of the above [2], since the longitudinal axis of the opening is formed so as to be orthogonal to the centerline of the polar pitch angle when viewed from the sight line including the axial center of the rotor core, the stress of the permanent magnet caused by the rotation of the rotor core can be concentrated on the rib. Additionally, since the side surfaces of the rib have the first rib side surface on the permanent magnet side, the first circular arc connected to the first rib side surface, the second rib side surface on the interpole side, and the second circular arc connected to the interpole from the second rib side surface, the stress caused by the rotation of the rotor core can be concentrated between the first rib side surface and the second rib side surface. From the above, the stress caused by the rotation of the rotor core can be efficiently absorbed by the stress-absorbing portion provided between the first rib side surface and the second rib side surface.

According to the rotor related to the aspect of the above [3], the distance from the axial center becomes shorter when approaching both the circumferential ends of the polar pitch angle from the intersection between the centerline passing through the central angle of the polar pitch angle and the outer peripheral surface of the rotor core. For this reason, the distance between the outer peripheral surface of the rotor core and the outer peripheral surface of the stator becomes larger when approaching both the circumferential ends of the polar pitch angle, and torque ripple and cogging torque caused by the rotation of the rotor core can be reduced. As a result, vibration or noise can be suppressed during motor driving when the rotor core rotates.
Additionally, at both the circumferential ends of the polar pitch angle, there is the distance between the outer peripheral surface of the rotor core and the outer peripheral surface of the stator. For this reason, even if the rib stretches by the stress caused by the rotation of the rotor core being absorbed by the stress-absorbing portion, the portion where the rib has stretched does not easily protrude radially outward more than the outermost peripheral surface of the rotor. Therefore, the interference between the stator and the rotor can be reliably prevented. Additionally, the gap between the stator and the rotor can be made smaller.

According to the rotor related to the aspect of the above [4], if a centrifugal force is generated in the permanent magnet during rotor rotation, the permanent magnet abuts against at least two places of both the circumferential ends of the inner wall side surface of the opening. For this reason, the permanent magnet does not abut against one place of the inner wall side surface of the opening in a concentrated manner, and a stress concentration portion can be prevented from being generated in the rotor core. Accordingly, the strength of the rotor core can be improved.

According to the motor related to the aspect of the above [5], the stress resulting from the centrifugal force generated in the permanent magnet during rotor rotation can be absorbed in the stress-absorbing portion by the stress-absorbing portion being formed at the rib. As a result, the stress concentration to the root of the rib can be suppressed. For this reason, it is unnecessary to secure the thickness of the root portion of the rib, the degree of freedom in the design of the rotor core can be improved, and reduction in the weight of the rotor core can be realized. Additionally, the torque ripple can be reduced while generating reluctance torque by the interpole being formed at the rotor core. From the above, a motor that can improve torque can be provided.

### Brief Description of Drawings

FIG. 1 is a schematic cross-sectional view of the configuration of a motor unit in one embodiment of the invention.
FIG. 2 is a plan view of a rotor in this embodiment.
FIG. 3 is a partially enlarged view of the rotor.
FIG. 4 is a graph showing changes in cogging torque and torque ripple when a gap is provided at the outer peripheral surface of a rotor core in this embodiment.
FIG. 5 is a view in which segments required to illustrate the shape of a rib are described in a partially enlarged view of FIG. 3.
FIG. 6 is a view (corresponding to FIG. 3) showing the shape of another aspect of an interpole-forming groove in one embodiment of the invention.
FIG. 7 is a view (corresponding to FIG. 3) showing the shape of still another aspect of the interpole-forming groove in one embodiment of the invention.

### Description of Embodiments

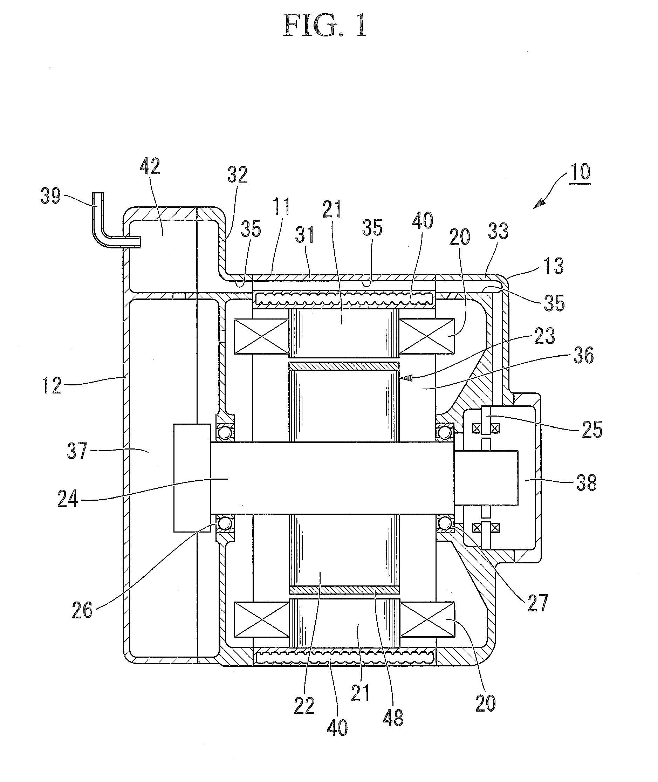

Next, a motor related to one embodiment of the invention will be described with reference to FIGS. 1 to 7. In addition, a motor used as a motor unit for a vehicle is described in the present embodiment.
FIG. 1 is a schematic cross-sectional view of the configuration of the motor unit for a vehicle. As shown in FIG 1, a motor unit 10 for a vehicle (hereinafter referred to as motor unit) is provided with a motor 23. The motor 23 is equipped with a rotor 22. A cylindrical stator 21 around which winding wires (coils) 20 are wound and permanent magnets 48 are disposed in the rotor 22. Additionally, the rotor 22 is arranged to face the stator 21 at a predetermined interval therefrom.
Moreover, the motor unit 10 is equipped with a motor housing 11, a transmission housing 12, and a sensor housing 13. The motor 23 is accommodated in the motor housing 11. Additionally, the transmission housing 12 is fastened to one side of the motor housing 11, and a power transmission part (not shown) is accommodated in the transmission housing 12. The power generated from an output shaft 24 of the motor 23 is transmitted to this power transmission part. The sensor housing 13 is fastened to the other side of the motor housing 11, and a rotation sensor 25 of the motor 23 is accommodated in the sensor housing 13. In addition, the inside of the motor housing 11 is constituted as a motor chamber 36, the inside of the transmission housing 12 is constituted as a transmission chamber 37, and, the inside of the sensor housing 13, is constituted as a sensor chamber 38.

The motor housing 11 is formed in a substantially cylindrical shape that covers the whole motor 23. A bearing 26 that rotatably supports one end of the output shaft 24 of the motor 23 is provided on the transmission housing 12 side of a boundary portion between the motor housing 11 and the transmission housing 12. A bearing 27 that rotatably supports the other end of the output shaft 24 of the motor 23 is provided on the sensor housing 13 side of a boundary portion between the motor housing 11 and the sensor housing 13.

Breather passages 35 that communicate with each other are respectively formed in a wall portion 31 of the motor housing 11, a wall portion 32 of the transmission housing 12, and a wall portion 33 of the sensor housing 13.
Moreover, a water jacket 40 for cooling the motor 23 is provided within the wall portion 31 of the motor housing 11 so as to cover the whole circumference of the stator 21 of the motor 23. Additionally, the stator 21 is press-fitted into the motor housing 11, and is disposed so as to come into close contact with the inner peripheral surface of the motor housing 11.

A breather chamber 42 for separating lubrication oil that is being used within the motor unit 10 is formed within the transmission housing 12. Thereby, the lubrication oil scattered by the rotation of the power transmission part (gear) or the motor 23 is separated by the breather chamber 42, and can be prevented from leaking from breather piping 39 to the outside.

The breather chamber 42 is formed at a position corresponding to a topmost part of the motor unit 10. Additionally, the breather chamber 42 communicates with the breather passages 35 so that the high-pressure and high-temperature air within the motor unit 10 can be discharged from the breather piping 39. Moreover, the breather chamber 42 communicates with the motor chamber 36, the transmission chamber 37, and the sensor chamber 38 via the breather passages 35.

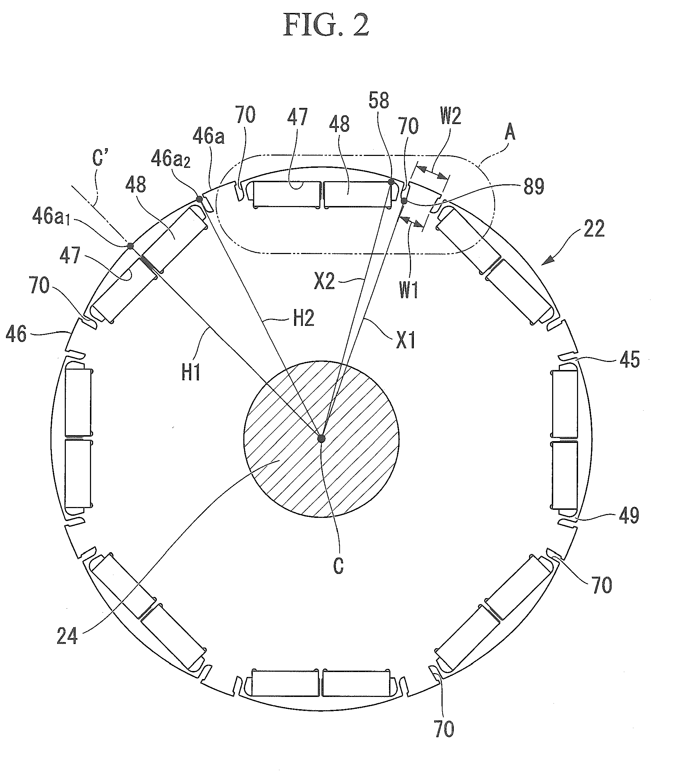

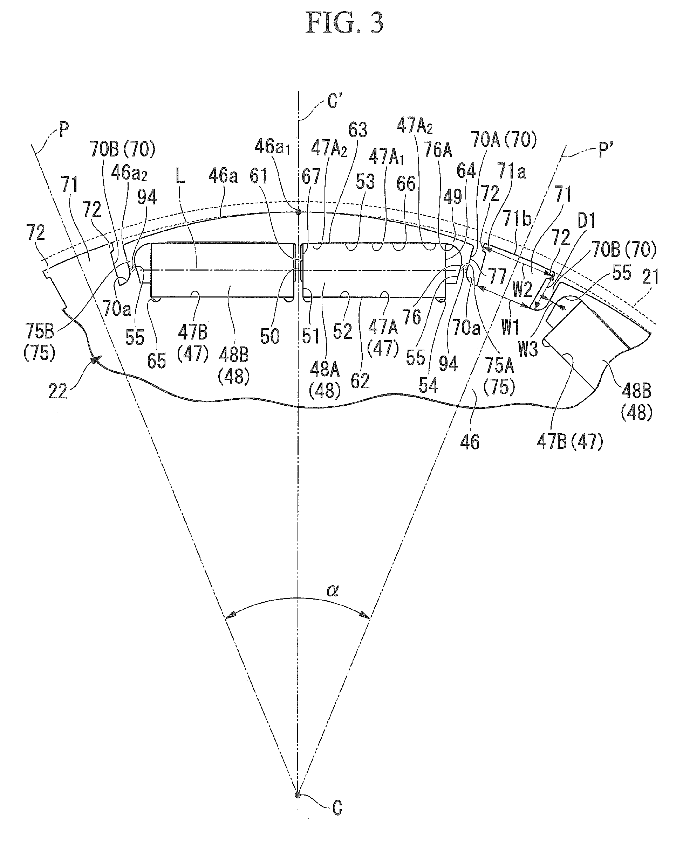

Here, the configuration of the rotor 22 of the motor unit 10 will be described below in detail with reference to FIGS. 2 and 3. FIG 2 is a plan view of the rotor 22, and FIG. 3 is a partially enlarged view (portion A of FIG. 2) of the rotor 22.
As shown in FIG. 2, the rotor 22 is equipped with a columnar rotor core 46 and permanent magnets 48, and is supported so as to be rotatable about an output shaft (axial center) C. A plurality of substantially ring-shaped magnetic plates 45, which are circular in a case where the rotor core 46 is viewed from a sight line including the axial center C, are stacked. Moreover, openings 47 are formed, for example, at equal intervals, in the circumferential direction of yoke portions 49 in the vicinity of an outer peripheral surface 46a of the rotor core 46.
The permanent magnets 48 are held within the openings 47, respectively. The rotor 22 constitutes a so-called IPM (Interior Permanent Magnet) motor in which the permanent magnets 48 are embedded in the rotor core 46.

As shown in FIG. 3, in a case where the rotor core 46 of the present embodiment is viewed from the sight line including the axial center C of the rotor core 46, the permanent magnets 48 (48A, 48B) constituting a plurality of poles are arranged at predetermined polar pitch angles α (angle between centerlines P-P' of respective poles) along the circumferential direction of the rotor core 46.
Additionally, first openings 47A having the first permanent magnets 48A inserted thereinto and having a substantially rectangular shape, second openings 47B having the second permanent magnets 48B inserted thereinto and having a substantially rectangular shape, and partitions 50 partitioning the first openings 47A and the second openings 47B are formed in a region on the outer peripheral side of the rotor core 46 such that a permanent magnet 48 disposed at one pole is arranged in a segmented manner as the first permanent magnet 48A and the second permanent magnet 48B. Also, a longitudinal axis L of each opening 47 (the first opening 47A or the second opening 55B) is orthogonal to a centerline C' passing through the central angle of the polar pitch angle α when viewed from the sight line including the axial center C of the rotor core 46. In addition, in the following description, the centerline of the polar pitch angle α is defined as a centerline C'.

In the following description, the shapes of the opening 47 and the permanent magnets 48 will be described. However, both the shapes of the first opening 47A and the second opening 47B and the shapes of the first permanent magnet 48A and the second permanent magnet 48B are symmetrical via the partition 50. Therefore, only the shape of the first opening 47A and the shape of the first permanent magnet 48A will be described below.

The first opening 47A is formed in a substantially rectangular shape by a first straight portion 51, a second straight portion 52, a third straight portion 53 and filling cutout portions 54, and a flux barrier 55.
Among these, the first straight portion 51 is located at a position corresponding to a side surface of the partition 50, and is formed so as to run along the radial direction of the rotor core 46 when viewed from the sight line including the axial center C. The second straight portion 52 is provided to extend in a direction substantially perpendicular to the first straight portion 51 from the end portion of the partition 50 on the axial center C side (the internal diameter side of the rotor core 46), and the filling cutout portions 54 for filling an adhesive are provided at both ends of the second straight portion 52. The third straight portion 53 is provided to extend in a direction substantially perpendicular to the first straight portion 51 from the end portion of the partition 50 on the outer peripheral surface 46a side. Also, the flux barrier 55 is formed so as to swell outward in the circumferential direction from the end portion of the second straight portion 52 and the end portion of the third straight portion 53. In addition, a peripheral edge portion (first circular arc) 76A of the flux barrier 55 is formed so as to have a circular arc shape, and it is preferable that the curvature radius thereof be larger in forming the flux barrier.
If the rotor core 46 rotates in a state where the first permanent magnet 48A is inserted into the first opening 47A, a centrifugal force is applied to the first permanent magnet 48A. Thereby, although a tensile stress acts on the first circular arc 76A, in particular, the stress on the external diameter side of the flux barrier 55 on which the centrifugal force is apt to act can be widely and effectively decentralized by forming the curvature radius of the first circular arc 6A to be large. Since the tensile stress of the first permanent magnet 48A caused by the centrifugal force can be widely decentralized, breakage of the rotor core 46 can be prevented and predetermined strength can be secured.

The first permanent magnet 48A is disposed within the first opening 47A. The first permanent magnet 48A has a first straight portion 61 corresponding to the first straight portion 51 of the first opening 47A, a second straight portion 62 corresponding to the second straight portion 52 of the first opening 47A, a third straight portion (planar portion) 63 that faces the third straight portion 53 of the first opening 47A, and a fourth straight portion (side surface of the first opening 47A in the lateral direction) 64 that connects the end portion of the second straight portion 62 of the first opening 47A and the end portion of the third straight portion 63 and is provided to extend substantially parallel to the first straight portion 61. That is, the first permanent magnet 48A is formed, for example, in a quadrilateral shape, such as a substantially oblong shape, when viewed from the sight line including the axial center C.

Moreover, a region surrounding a circumferential center 47A₁ in an inner wall side surface (third straight portion 53) of the first opening 47A that faces the third straight portion 63 of the first permanent magnet 48A on the radial outside is located on the radial outside of the rotor core 46 with respect to both circumferential ends 47A₂. The region around the center 47A₁ located closer on the radial outside than both the ends 47A₂ is defined as a relief groove 66.
The relief groove 66 is formed over a predetermined range in the third straight portion 53. As the relief groove 66 is formed in the third straight portion 53 in this way, the permanent magnet 48 abuts against each of both the ends 47A₂ at least in two places even if a centrifugal force is generated in the permanent magnet 48 during the rotation of the rotor core 46. For this reason, the permanent magnet 48 does not abut against one place of the inner wall side surface of the first opening 47A in a concentrated manner, and a stress concentration portion can be prevented from being generated in the rotor core 46. Accordingly, the strength of the rotor core 46 can be improved. Additionally, the place where the stress of the permanent magnet 48 is applied can be arbitrarily set by adjusting the range where the relief groove 66 is provided.

Additionally, a relief groove 67 is formed over a predetermined region in the inner wall side surface (first straight portion 51) of the first opening 47A that faces the first straight portion 61 of the first permanent magnet 48A on the partition 50 side. The relief groove 67 is formed so that the circumferential thickness of the partition 50 can be decreased. As the relief groove 67 is formed in this way, the permanent magnet 48 abuts against some regions of the first straight portion 51 if a centrifugal force is generated in the permanent magnet 48 during the rotation of the rotor core 46. For this reason, the place where the stress of the permanent magnet 48 is applied can be intentionally set by adjusting the range where the relief groove 67 is provided. Accordingly, the strength of the rotor core 46 can be improved.

Additionally, as shown in FIG. 3, when the rotor core 46 is viewed from the sight line including the axial center C, the portion of the yoke portion 49 corresponding to the polar pitch angle α of the outer peripheral surface 46a is formed in a curved manner. That is, the distance of the outer peripheral surface 46a in the yoke portion 49 from the axial center C becomes shorter when approaching both the circumferential ends of the polar pitch angle α of the outer peripheral surface 46a from an intersection 46a₁ between the centerline C' and the outer peripheral surface 46a of the rotor core 46. Hereinafter, the portions of the outer peripheral surface 46a of the yoke portion 49 that are nearest to both the circumferential ends of the pitch angle are defined as both the circumferential ends 46a₂.
To describe specifically, as shown in FIG. 2, H1>H2 is satisfied if the length H1 from the axial center C to the intersection 46a₁ is compared with the length H2 from the axial center C to both the ends 46a₂. That is, as shown in FIG 3, the gap (gap) between the outer peripheral surface 46a and the outer peripheral surface (teeth portion) of a stator 21 becomes larger when approaching both the circumferential ends 46a₂ from an intersection 46a₁.

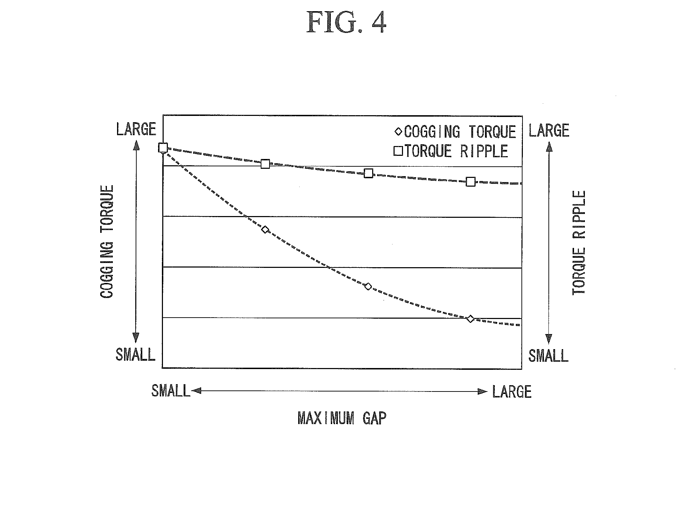

The results obtained by analyzing the correlation between the size of the gap between both the circumferential ends 46a₂ of the outer peripheral surface 46a and the teeth portion of the stator 21 and the magnitude of cogging torque and torque ripple is shown in FIG. 4. As shown in FIG. 4, it turns out that the cogging torque and the torque ripple decrease as the gap between both the circumferential ends 46a₂ and the teeth portion of the stator 21 is made larger. That is, the cogging torque and the torque ripple can be reduced effectively while securing the strength of the rotor core 46, by shortening the distance from the axial center C when approaching both the circumferential ends 46a₂ from the intersection 46a₁. As a result, generation of noise or vibration when the rotor core 46 rotates can be suppressed.

Referring back to FIG 3, a set of groove portions (interpole-forming grooves) 70 including a first groove 70A and a second groove 70B, which extends in the direction of the axial center C from the outer peripheral surface 46a, are formed on both circumferential sides of the openings 47 between adjacent poles in the rotor core 46. That is, the same number of interpole-forming grooves 70 as magnetic poles are formed. As shown in FIG. 3, a region sandwiched between the first groove 70A and the second groove 70B, which are adjacent to each other, is constituted as an interpole 71. The interpole 71 functions as a region through which magnetic flux passes.

The groove portion 70 (the first groove 70A or the second groove 70B) is formed to be substantially U-shaped in plan view in the immediate vicinity of the flux barrier 55, when viewed from the sight line including the axial center C. Here, a groove portion formed in the vicinity of the first permanent magnet 48A is defined as the first groove 70A and a groove portion formed in the vicinity of the second permanent magnet 48B is defined as the second groove 70B. That is, the region narrowly arranged between the first groove 70A and the second groove 70B in the rotor core 46 serves as the interpole 71.

Convex portions 72 that protrude to both circumferential sides are respectively formed on both circumferential sides of an outer peripheral edge 71a of the interpole 71. As for the circumferential thickness of the interpole 71, the thickness W2 of the region of the outer peripheral edge 71a is formed to be greater than the thickness W1 of a region on the radial inside. The shape of the convex portion 72 is desirably a substantially rectangular shape when viewed from the sight line including the axial center C. As the convex portion 72 is formed in a substantially rectangular shape, the area of the convex portions 72 can be secured to be as large as possible while securing the circumferential width of the groove portion 70.
Additionally, the length from the outer peripheral surface 71b in the interpole 71 to the axial center C is almost the same along the circumferential direction of the interpole 71. That is, the gap between the outer peripheral surface 71b of the interpole 71 and the teeth portion of the stator 21 is almost equal over the total length.

Moreover, the inner peripheral surface 70a of the groove portion 70 is formed in a curved manner, and the distance between the inner peripheral surface 70a and the axial center C becomes gradually shorter when approaching the side where the interpole 71 is disposed from the centerline C'. The circumferential width of the interpole 71 can be secured to be large by forming the inner peripheral surface 70a of the groove portion 70 in a curved manner in this way. For this reason, improvement in the torque of the motor 23 or improvement in the strength of the rotor core 46 can be achieved. In addition, in a case where the inner peripheral surface 70a is formed in a curved manner as described above and in a case where the inner peripheral surface is formed so as to be U-shaped, stress distribution does not change even in a case where the centrifugal force of the permanent magnet 48 is generated due to the rotation of the rotor 22. That is, even in a case where the shape of the inner peripheral surface 70a is any one of the above shapes, stress is generated on the centerline C' side of the inner peripheral surface 70a, but stress is not generated on the interpole 71 side. Accordingly, the circumferential width of the groove portion 70 can be made small by curvedly forming the inner peripheral surface 70a of the groove portion 70 so that the distance between the inner peripheral surface of the groove portion and the axial center C becomes gradually shorter when approaching the side where the interpole 71 is arranged from the centerline C'.

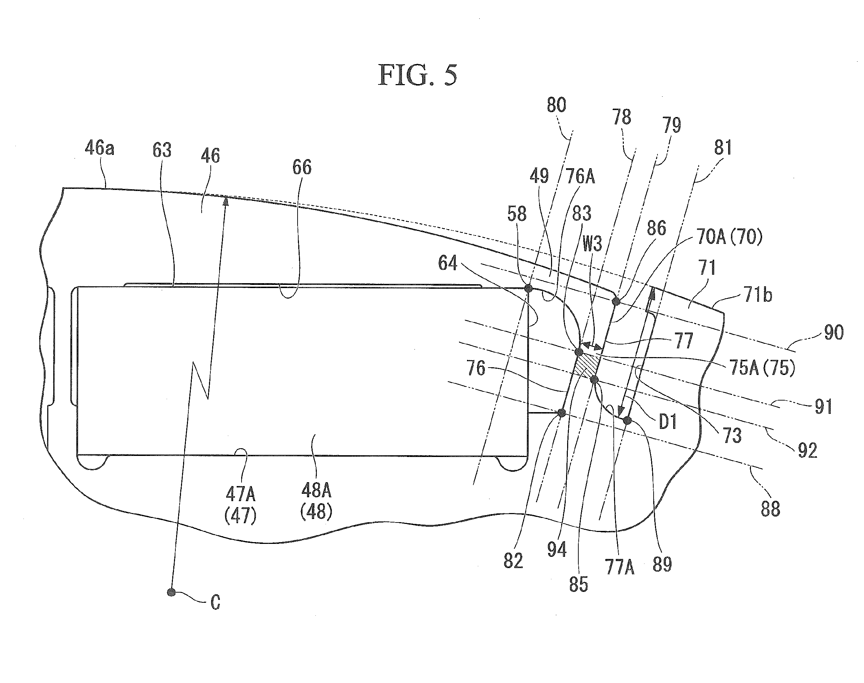

Ribs 75 (a rib 75A and a rib 75B) are formed between the openings 47 (the first opening 47A and the second opening 47B) and the groove portions 70 (the first groove 70A and the second groove 70B), respectively, on the yoke portion 49 of the rotor core 46. The ribs 75A and 75B are symmetrically formed via the permanent magnets 48, respectively. Hence, the configuration of a rib 75 will be described below taking the rib 75A as an example with reference to FIG. 5.

A straight portion of a side surface on the first permanent magnet 48A side among side surfaces of the rib 75A in the circumferential direction is defined as a first rib side surface 76, and a straight portion of a side surface on the interpole 71 side is defined as a second rib side surface 77. The first rib side surface 76 and the second rib side surface 77 are provided so as to become parallel. Additionally, the first rib side surface 76 and the second rib side surface 77 are formed so as to incline at an angle of-45° to +45° with respect to the fourth straight portion 64 when viewed from the sight line including the axial center C. In the present embodiment, an example in which the first rib side surface 76 and the second rib side surface 77 are formed so as to incline at the angle of about +30° with respect to the fourth straight portion 64 is described.

Here, as shown in FIG. 5, a segment along the first rib side surface 76 is defined as a first rib side surface-forming line 78, and a segment along the second rib side surface 77 is defined as a second rib side surface-forming line 79. A segment parallel to the first rib side surface-forming line 78 and the second rib side surface-forming line 79 and passing through an outer-peripheral-side corner portion 58 of the first permanent magnet 48A is defined as a first parallel line 80, and a segment parallel to the first rib side surface-forming line 78 and the second rib side surface-forming line 79 and passing through a deepest portion (a portion furthest toward the internal diameter side in the inner periphery of the groove portion 70) 89 of the groove portion 70 is defined as a second parallel line 81. In addition, in the present embodiment, the second parallel line 81 becomes a segment that coincides with the side surface 73 of the interpole 71.

Additionally, the first rib side surface 76 is connected to the first circular arc 76A with a circular-arc shape. The first rib side surface 76 overlaps the first rib side surface-forming line 78, and an end portion of the region thereof on the axial center C side is defined as a first starting point 82, and an end portion thereof on the outer peripheral surface 46a is defined as the first ending point 83.
Additionally, the second rib side surface 77 is connected to the second circular arc 77A with a circular-arc shape. The second rib side surface 77 overlaps the second rib side surface-forming line 79, and an end portion of the region thereof on the axial center C side is defined as a second starting point 85, and an end portion thereof on the outer peripheral surface 46a is defined as the second ending point 86.

In the present embodiment, in a case where a segment orthogonal to the first rib side surface-forming line 78 and passing through the first starting point 82 is defined as a first perpendicular line 88, a second starting point 85 is located closer to the outer peripheral surface 46a side than the first perpendicular line 88. Additionally, the deepest portion 89 of the side surface 73 of the interpole 71 is located closer to the outer peripheral surface 46a side than the first perpendicular line 88 and is located closer to the axial center C side than the second starting point 85.
Moreover, in a case where a segment orthogonal to the second rib side surface-forming line 79 and passing through the second ending point 86 is defined as a second perpendicular line 90, the first ending point 83 is located closer to the axial center C side than the second perpendicular line 90. Also, the outer-peripheral-side corner portion 58 of the first permanent magnet 48A is located closer to the axial center C side than the second perpendicular line 90 and closer to the outer peripheral surface 46a than the first ending point 83.

In the present embodiment, the first ending point 83 and the outer-peripheral-side corner portion 58 of the first permanent magnet 48A are connected by, for example, the first circular arc 76A with a circular-arc shape. Also, the second starting point 85 and the deepest portions 89 are also connected by, for example, the second circular arc 77A with a circular-arc shape. In addition, the shape of the first circular arc 76A and the second circular arc 77A is not limited to the circular-arc shape, and may be a straight shape.

In a cross-sectional view of a cross-section including the axial center C of the rotor 22, the rib 75 is formed with a stress-absorbing portion 94 made from a thin-walled portion with a smallest thickness in the yoke portion 49. If segments parallel to the first perpendicular line 88 and intersecting the first rib side surface 76 and the second rib side surface 77 are defined as a third perpendicular line 91 and a fourth perpendicular line 92, respectively, the stress-absorbing portion 94 becomes a region surrounded by the first rib side surface 76, the second rib side surface 77, the third perpendicular line 91, and the fourth perpendicular line 92.

Additionally, the distance D1 between the second circular arc 77A and the outer peripheral surface 71b is set to a depth such that the short-circuiting magnetic flux between respective adjacent poles can be reduced. Specifically, as shown in FIG. 2, the distance X1 when the axial center C and the deepest portion 89 are connected to each other is shorter than the distance X2 between the outer-peripheral-side corner portion 58 of the permanent magnet 48 near the deepest portion 89 and the axial center C. That is, the position of the deepest portion 89 is set so that the groove portion 70 and the permanent magnet 48 overlap each other in the circumferential direction.

In addition, although the circumferential width of the groove portion 70 is not particularly limited, it is desirable to set the width to a length such that the strength of the rotor core 46 is secured. Additionally, it is preferable for the performance of the motor 23 that the formation position of the groove portion 70 be a position closer to the permanent magnet 48 near the groove portion 70. However, as shown in FIG. 5, the circumferential width W3 of the stress-absorbing portion 94 becomes smaller as the formation position of the groove portion 70 becomes closer to the permanent magnet 48. For this reason, it is required to set the circumferential width W3 of the circumferential of the stress-absorbing portion 94 and the formation position of the groove portion 70 in consideration of the strength of the rotor core 46. Additionally, although the stress-absorbing portion 94 in the rotor core 46 becomes a portion where magnetic flux is saturated most, occurrence of magnetic flux short-circuiting can be prevented by the flux barrier 55 being formed on one side of the stress-absorbing portion 94 and the groove portion 70 being formed on the other side.

According to the present embodiment, if the rotor core 46 rotates around the axial center C in a state where the permanent magnet 48 is inserted into the opening 47, a centrifugal force is generated in the permanent magnet 48. In this case, the stress generated in the rotor 22 due to the permanent magnet 48 concentrates on the stress-absorbing portion 94 by providing the rib 75 (75A, 75B) with the stress-absorbing portion 94 made from a thin-walled portion with a smallest thickness in the yoke portion 49 in a cross-sectional view of a cross-section including the axial center C of the rotor 22. For this reason, the stress generated in the rotor 22 can be absorbed by the stress-absorbing portion 94. As a result, the stress can be prevented from concentrating on the root of the rib 75. For this reason, it is unnecessary to secure the thickness of the root portion of the rib 75, the degree of freedom in the design of the rotor core 46 can be improved, and reduction in the weight of the rotor 22 can be realized.

Since the longitudinal axis L of the opening 47 is formed so as to be orthogonal to the centerline C' when viewed from the sight line including the axial center C of the rotor core 46, the stress of the permanent magnet 48 caused by the rotation of the rotor core 46 can be concentrated on the rib 75.
Additionally, since the side surfaces of the rib 75 in the circumferential direction are formed with the first rib side surface 76, the first circular arc 76A connected to the first rib side surface 76, the second rib side surface 77, and the second circular arc 77A connected to the interpole 71 from the second rib side surface 77, the stress concentrated on the rib 75 can be efficiently absorbed by the stress-absorbing portion 94 provided between the first rib side surface 76 and the second rib side surface 77. Additionally, the tensile stress that acts on the peripheral edge portion of the flux barrier 55 due to the rotation of the rotor core 46 can be widely and effectively decentralized in the first circular arc 76A. For this reason, damage of the rotor core 46 caused by the tensile stress can be prevented, and predetermined strength can be secured.

That is, since the distance from the axial center C becomes shorter when approaching both the circumferential ends of the polar pitch angle α of the outer peripheral surface 46a from the intersection 46a₁ between the centerline C' and the outer peripheral surface 46a of the rotor core 46, the distance between the outer peripheral surface 46a of the rotor core 46 and the teeth portion (outer peripheral surface) of the stator 21 becomes larger when approaching both the circumferential ends 46a₂. This can reduce the torque ripple and the cogging torque caused by the rotation of the rotor core 46. As a result, vibration or noise can be prevented from being generated during motor driving when the rotor core 46 rotates.
Additionally, since a distance is present between the outer peripheral surface 46a of the rotor core 46, and the outer peripheral surface of the stator 21 at both the circumferential ends 46a₂ even if the rib 75 stretches by the stress caused by the rotation of the rotor core 46 being absorbed by the stress-absorbing portion 94, the portion does not easily protrude radially outward more than the outermost peripheral surface 46a side of the rotor 22. For this reason, the interference between the stator 21 and the rotor 22 can be reliably prevented. Additionally, the gap between the stator 21 and the rotor 22 can be made smaller.

Moreover, as the relief groove 66 is formed in the opening 47, the permanent magnet 48 abuts against each of both the ends 47A₂ at least in two places even if a centrifugal force is generated in the permanent magnet 48 during the rotation of the rotor core 46. For this reason, the permanent magnet 48 does not abut against one place of the inner wall side surface of the first opening 47A in a concentrated manner, and a stress concentration portion can be prevented from being generated in the rotor core 46. Additionally, the place where the stress of the permanent magnet 48 is applied can be intentionally set by adjusting the range where the relief groove 66 is provided. Accordingly, the strength of the rotor core 46 can be improved.

The torque ripple can be reduced while generating the reluctance torque, by adopting the motor 23 having the rotor 22 configured as described above. The motor 23 that can raise the torque can be provided from the above.

In addition, it should be understood that the present invention is not limited to the above-described embodiment, but that various modifications of the above-described embodiment may be made without departing from the scope of the invention. That is, the specific structures and shapes as set forth in the embodiment are no more than examples and can be appropriately changed.
For example, although a case where the partition 50 is provided at the rotor core 46 to split the permanent magnet 48 so as to be disposed as the first permanent magnet 48A and the second permanent magnet 48B has been described in the present embodiment, the permanent magnet 48 may not be split.
Additionally, in the present embodiment, the filling cutout portions 54 for being filled with an adhesive are formed in the opening 47. However, in a case where the permanent magnet 48 can be fixed within the opening 47 by other means, the filling cutout portions 54 may not be formed.
Additionally, although a case where the permanent magnet 48 is fixed by filling the gap between the opening 47 and the permanent magnet 48 with an adhesive has been described in the present embodiment, any kind of filler material may be used as long as the permanent magnet 48 is held within the opening 47.

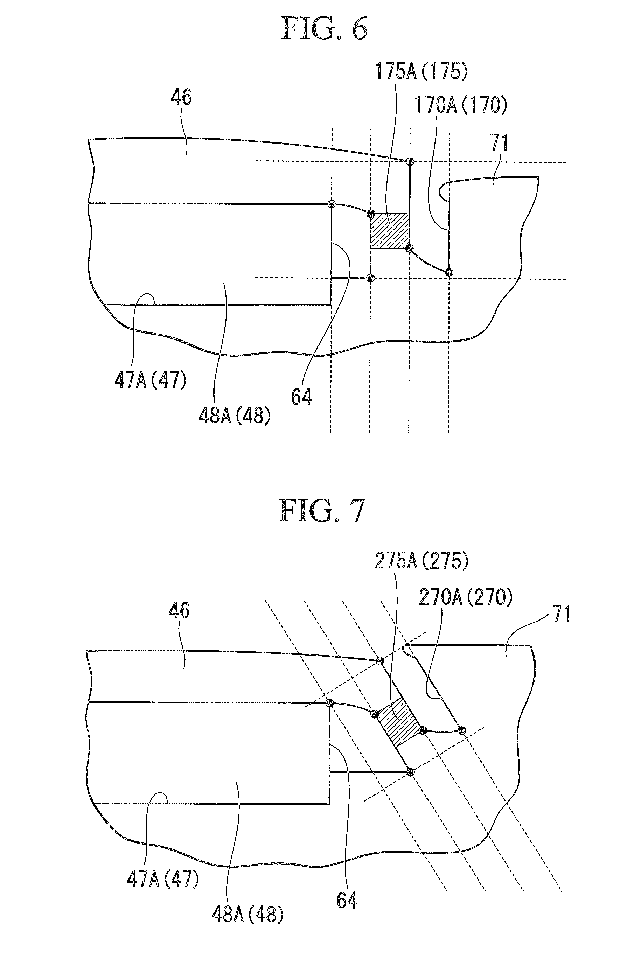

Moreover, although a case where the first rib side surface 76 and the second rib side surface 77 are formed so as to incline at an angle of about +30° with respect to the fourth straight portion 64 when viewed from the sight line including the axial center C is described in the present embodiment, as shown in FIG. 6, the side surfaces of a rib 175A in the circumferential direction may be formed so as to be substantially parallel (an angle of about 0° with respect to the fourth straight portion 64) to the fourth straight portion 64.
Additionally, as shown in FIG. 7, the side surfaces of a rib 275A in the circumferential direction may be formed so as to incline at an angle of about -30° with respect to the fourth straight portion 64. That is, the side surfaces of the first rib in the circumferential direction may be formed so as to incline at an angle of -45° to +45° with respect to the fourth straight portion 64.

### Industrial Applicability

According to the invention, a rotor and a motor capable of suppressing stress concentration on the root of a rib can be provided.

### Reference Signs List

| | |
|---|---|
| 20: | COIL (WINDING WIRE) |
| 21: | STATOR |
| 22: | ROTOR |
| 23: | MOTOR |
| 46: | ROTOR CORE |
| 46a: | OUTER PERIPHERAL SURFACE |
| 46a₁: | INTERSECTION |
| 46a₂: | BOTH ENDS |
| 47 (47A, 47B): | OPENING |
| 47A₁: | CENTER |
| 47A₂: | BOTH ENDS |
| 48 (48A, 48B): | PERMANENT MAGNET |
| 49: | YOKE PORTION |
| 50: | PARTITION |
| 58: | OUTER-PERIPHERAL-SIDE CORNER PORTION |
| 63: | THIRD STRAIGHT PORTION (PLANAR PORTION) |
| 64: | FOURTH STRAIGHT PORTION (SIDE SURFACE IN LATERAL DIRECTION) |
| 66: | RELIEF GROOVE |
| 70: | GROOVE PORTION (PAIR OF INTERPOLE-FORMING GROOVES) |
| 70a: | INNER PERIPHERAL SURFACE |
| 70A: | FIRST GROOVE |
| 70B: | SECOND GROOVE |
| 71: | INTERPOLE |
| 73: | SIDE SURFACE OF INTERPOLE |
| 75 (75A, 75B): | RIB |
| 76: | FIRST RIB SIDE SURFACE |
| 76A: | FIRST CIRCULAR ARC |
| 77: | SECOND RIB SIDE SURFACE |
| 77A: | SECOND CIRCULAR ARC |
| 78: | FIRST RIB SIDE SURFACE-FORMING LINE |
| 79: | SECOND RIB SIDE SURFACE-FORMING LINE |
| 80: | FIRST PARALLEL LINE |
| 81: | SECOND PARALLEL LINE |
| 82: | FIRST STARTING POINT |
| 83: | FIRST ENDING POINT |
| 85: | SECOND STARTING POINT |
| 86: | SECOND ENDING POINT |
| 88: | FIRST PERPENDICULAR LINE |
| 89: | DEEPEST PORTION (PORTION FURTHERST TOWARD INTERNAL DIAMETER SIDE) |
| 90: | SECOND PERPENDICULAR LINE |
| 91: | THIRD PERPENDICULAR LINE |
| 92: | FOURTH PERPENDICULAR LINE |
| 94: | STRESS-ABSORBING PORTION (THIN-WALLED PORTION) |
| C: | AXIAL CENTER |
| C': | CENTERLINE |
| α: | POLAR PITCH ANGLE |
| H1: | LENGTH FROM AXIAL CENTER TO INTERSECTION |
| H2: | LENGTH FROM AXIAL CENTER TO BOTH ENDS |

## Claims

1. A rotor comprising:
a columnar rotor core; and
permanent magnets arranged side by side along a predetermined polar pitch angle in a circumferential direction of the rotor core when viewed from a sight line including an axial center of the rotor core,
wherein the rotor core is formed with:
openings formed in an outer peripheral surface of the rotor core and having the permanent magnets inserted thereinto;
interpole-forming grooves formed by a pair of first and second grooves that each extend in a direction of the axial center on both circumferential sides of the openings, and formed in a same number as a number of magnetic poles;
an interpole formed between the first groove and the second groove adjacent to the first groove; and
a rib formed between the opening and the interpole-forming groove, in a yoke portion of the rotor core,
wherein the rib is formed with a stress-absorbing portion made from a thin-walled portion with a smallest thickness in the yoke portion in a cross-sectional view of a cross-section including the axial center of the rotor.

2. The rotor according to Claim 1,
wherein a longitudinal axis of the opening is formed so as to be orthogonal to a centerline passing through a central angle of the polar pitch angle when viewed from the sight line including the axial center of the rotor core,
wherein side surfaces of the rib have a first rib side surface on a side of the permanent magnet, a first circular arc connected to the opening from the first rib side surface, a second rib side surface on the interpole side, and a second circular arc connected to the interpole from the second rib side surface, and
wherein the stress-absorbing portion is provided between the first rib side surface and the second rib side surface.

3. The rotor according to Claim 1,
wherein when viewed from the sight line including the axial center of the rotor core, a distance of the yoke portion from the axial center becomes shorter when approaching both circumferential ends of the polar pitch angle from an intersection between a centerline passing through a central angle of the polar pitch angle and the outer peripheral surface of the rotor core.

4. The rotor according to Claim 1,
wherein a circumferential center of an inner wall side surface of the opening that faces a planar portion on a radial outside of the permanent magnet is located on a radial outside of the rotor core with respect to both circumferential ends of the inner wall side surface.

5. A motor comprising:
the rotor according to any one of Claims 1 to 4;
a cylindrical stator surrounding the rotor; and
a winding wire wound around a teeth portion of the stator.
